# NEUE EUROPÄISCHE PATENTSCHRIFT

(11) **EP 2 153 184 B2**
(45) Veröffentlichungstag und Bekanntmachung des Hinweises auf die Entscheidung über den Einspruch: **27.10.2021**
(45) Hinweis auf die Patenterteilung: 07.03.2018
(21) Anmeldenummer: 08774001.5
(22) Anmeldetag: 16.07.2008
(51) Int. Cl.: G07G 1/14, G07G 1/00, G01G 19/414, G06Q 20/20

(54) **WÄGEVORRICHTUNG**
WEIGHING DEVICE
DISPOSITIF DE PESÉE

(30) Priorität: 16.07.2007 DE 102007033038
(43) Veröffentlichungstag der Anmeldung: 17.02.2010
(73) Patentinhaber: Bizerba SE & Co. KG, 72336 Balingen (DE)
(72) Erfinder: BLOCHER, Harald, 72355 Schömberg (DE)
(74) Vertreter: Manitz Finsterwald Patent- und Rechtsanwaltspartnerschaft mbB
(86) Internationale Anmeldenummer: PCT/EP2008/005815
(87) Internationale Veröffentlichungsnummer: WO 2009/010284

(56) Entgegenhaltungen:
- EP-A- 0 911 618
- WO-A-02/12840
- WO-A-02/18887
- DE-A1- 2 000 086
- DE-A1- 4 408 549
- DE-A1- 10 042 966
- DE-A1- 19 820 636
- "Auszug Ladenwaage SC Bedienungsanleitung", Bizerba GMBH, 2005,
- "Guide for Examining Software (Non-automatic Weighing Instruments)", WELMEC European co-operation in legal metrology, May 2005 (2005-05),
- Anonym: "RS Serie Bedienungsaleitung", OHAUS, 2004,
- Prospekt Mettler-Toledo Thekenwaagen LP-h, LP-EB, July 1998 (1998-07),
- Prospekt Mettler-Toledo UC-h, March 2004 (2004-03),

## Beschreibung

Die vorliegende Erfindung betrifft eine Wägevorrichtung zum Verarbeiten von Wägeergebnissen von Waren, mit wenigstens einer Waage zum Erzeugen der Wägeergebnisse gemäß dem Oberbegriff des Anspruchs 1. Eine derartige Wägevorrichtung ist aus der WO 02/18887 A1 bekannt. Insbesondere umfasst ein jedes der Wägeergebnisse zumindest das Gewicht der bei dem jeweiligen Wägevorgang gewägten Waage.

An einem Kassenplatz oder Point of Sale (POS), beispielsweise von Ladengeschäften, Supermärkten oder Verbrauchmärkten, werden an einer Kasse die Preise der von einem Kunden auf ein Kassenförderband, einen Kassentisch oder in einen Einkaufskorb gelegten Waren festgestellt und aufaddiert, woraufhin dann der Kunde die gekauften Waren bezahlen kann. Hierbei ist am Ende des Kassenförderbands üblicherweise eine Checkout-Waage mit einer Lastplatte mit einem Glasfenster vorgesehen, wobei unterhalb des Glasfensters ein Scanner eingebaut ist, der die an den Waren befindlichen Strichcodes zur Identifizierung der Waren und deren Preise liest, welche dann an die Kasse übergeben werden. Waren, welche nicht mit einem Strichcode ausgezeichnet sind und nach Gewicht verkauft werden, beispielsweise Obst oder Gemüse, werden auf die Lastplatte gelegt, so dass über eine Wägezelle der Checkout-Waage das Gewicht der jeweils auf der Lastplatte befindlichen Ware bestimmt werden kann. Das Gewicht der Ware sowie deren Preis, der von der Checkout-Waage aus dem Grundpreis der Ware (Preis/kg), welche in der Regel zuvor von der Kasse an die Checkout-Waage übermittelt wurde, und dem festgestellten Gewicht berechnet wird, können dann an die Kasse übertragen werden. Es gibt aber auch Kassensysteme ohne Scanner. Nicht zu wiegende Waren werden dann durch Eingabe einer Artikelnummer (PLU) über die Kassentastatur identifiziert.

Bei solchen Checkout-Systemen mit Checkout-Waagen wird der Preis einer mittels der Checkout-Waage gewägten oder mittels des Scanners gescannten Ware jeweils von der Kasse unmittelbar an einem Bondrucker oder sonstigem Kassendrucker, beispielsweise Laserdrucker, ausgegeben, so dass der Preis der Ware sofort, noch bevor die nächste Ware gescannt oder gewägt wird, mittels des Bondruckers als eine Zeile des Kassenbons abgedruckt wird. Die Reihenfolge, in der die den Waren zugehörigen Zeilen auf dem Kassenbon bzw. Kassenzettel abgedruckt sind, entspricht daher immer der Reihenfolge, in der die Waren eingescannt bzw. gewägt wurden, so dass der Kassenbon oft unübersichtlich ist.

Bei der eingangs genannten Waage muss es sich jedoch nicht um eine Checkout-Waage handeln. Es kann sich hierbei auch um eine an einer Wurst-, Fleisch- und/oder Käsetheke eines Supermarkts aufgestellte Waage handeln, die sich insbesondere im Verbund mit anderen solchen, an derselben Theke aufgestellten Waagen befindet. Bei einem derartigen Verbund ist es wünschenswert, ein Durchbedienen eines Kunden zu ermöglichen, d.h. der Einkauf eines Kunden an der Theke soll an jeder der Waagen im Verbund gestartet, fortgesetzt oder abgeschlossen werden können, wobei an Ende lediglich ein einziges Etikett über Gewicht und Preis für alle an der Theke erworbenen Waren und über den zugehörigen Gesamtpreis abgedruckt werden soll.

WO 02/ 12840 A2 beschreibt ein Wägesystem mit einer Wägeplattform mit einer Wägezelle, die ein Gewichtssignal ermittelt, und mit einer Elektronik, die dazu vorgesehen ist, das Gewichtssignal als Wägeergebnis auf einem Display darzustellen. Das Wägeergebnis wird nur dann dargestellt, wenn eine in der Wägeplattform gespeicherte ID der Wägeplattform auch in der Elektronik gespeichert ist.

Der Erfindung liegt daher die Aufgabe zugrunde, eine Möglichkeit anzugeben, die Flexibilität einer Wägevorrichtung der eingangs genannten Art beim Drucken zu erhöhen.

Diese Aufgabe wird durch eine Wägevorrichtung mit den Merkmalen des Anspruchs 1 gelöst, und insbesondere durch eine Wägevorrichtung mit wenigstens einer Waage und einer mit dieser verbundenen Checkout-Vorrichtung zum Verarbeiten von bei einer Vielzahl von zusammengehörigen Wägevorgängen eines Verkaufsvorganges erzeugten Wägeergebnissen von Waren, wobei ein jedes der Wägeergebnisse zumindest das Gewicht der bei dem jeweiligen Wägevorgang gewägten Ware umfasst und eine Speichereinrichtung vorgesehen ist, die dazu ausgebildet ist, den Wägeergebnissen zugeordnete Wägedatensätze zu speichern, wobei ein jeder der Wägedatensätze zumindest das Gewicht der bei dem jeweiligen Wägevorgang gewägten Ware und eine die jeweils gewägte Ware kennzeichnende Information umfasst, und wobei auf die Speichereinrichtung von einzelnen, auf der Waage und der Checkout-Vorrichtung laufenden Software-Modulen zugegriffen wird, die jeweils eine Identifikationsbezeichnung besitzen, wobei vorgesehen ist, dass eine Steuereinrichtung die Speichereinrichtung und den Zugriff auf die Speichereinrichtung derart steuert, dass die Wägedatensätze eines zusammenhängenden Verkaufsvorganges gleichzeitig neben Wägedatensätzen weiterer Verkaufsvorgänge in der Speichereinrichtung gespeichert und jeweils einem Verkaufsvorgang eindeutig zugeordnet sind, indem die Steuereinrichtung die Adressen der einzelnen Wägedatensätze verwaltet, und die Identifikationsbezeichnung des zugreifenden Softwaremoduls überprüft, ob diese für einen Speicherzugriff zugelassen ist, und lediglich bejahendenfalls einen Schreibzugriff auf einen von der Steuereinrichtung bestimmbaren, in einem freien Speicherbereich der Speichereinrichtung liegenden Speicherplatz erlaubt.

Es kann also eine Speichereinrichtung vorgesehen sein, die dazu ausgebildet ist, den Wägeergebnissen zugeordnete Wägedatensätze zu speichern, wobei ein jeder der Wägedatensätze zumindest das Gewicht der bei dem jeweiligen Wägevorgang gewägten Ware und eine die jeweils gewägte Ware kennzeichnende Information umfassen kann. Eine Steuereinrichtung kann dazu ausgebildet sein, die Speichereinrichtung derart zu steuern, dass die Wägedatensätze der Vielzahl von zusammengehörigen Wägevorgängen gleichzeitig gespeichert sind. Die gleichzeitig gespeicherten Wägedatensätze oder hieraus ermittelte Angaben können zu einem durch ein Auslösesignal vorgegebenen Zeitpunkt, insbesondere am Ende des Verkaufsvorgangs, insbesondere gemeinsam, an eine Kasseneinrichtung oder eine Druckeinrichtung ausgegeben werden.

Dies ermöglicht insbesondere, die Wägedatensätze bzw. die vorstehend genannten hieraus ermittelten Angaben, insbesondere die Namen, Gewichte und Preise der gewägten Waren, in einem Block am Ende des Verkaufsvorgangs abzudrucken, wodurch die Übersichtlichkeit des Kassenbons erhöht wird. Darüber hinaus können die Wägedatensätze bzw. die hieraus ermittelten Angaben sortiert aufgelistet werden. Beispielsweise kann Obst von Gemüse getrennt und/oder alphabetisch sortiert werden.

Bei der Checkout-Vorrichtung kann es sich beispielsweise um eine Kasse bzw. ein Kassenterminal bzw. ein POS-Terminal für eine Checkout-Waage, oder aber auch um eine Druckeinrichtung in einem Waagenverbund handeln. Ist die vorstehend genannte Steuereinrichtung Teil der Kasse, können die Wägeergebnisse der Vielzahl von zusammengehörigen Wägevorgängen zunächst insbesondere nacheinander empfangen werden, und es ist bevorzugt, wenn jedes der Wägeergebnisse eine Prüfsumme umfasst. Außerdem kann die Steuereinrichtung dann zusätzlich dazu ausgebildet sein, mittels einer Scanneinrichtung erzeugte Scannergebnisse von Waren zu verarbeiten. Ist die Steuereinrichtung Teil der Checkout-Waage, können die gleichzeitig gespeicherten Wägedatensätze über eine Kasse an die vorstehend genannte Druckeinrichtung ausgegeben werden, und es ist bevorzugt, wenn die Wägeergebnisse der Vielzahl von zusammengehörigen Wägevorgängen eine einzige Prüfsumme umfassen. Alternativ oder zusätzlich zu einer Prüfsumme können die Wägeergebnisse auch noch Verschlüsselungsdaten enthalten.

Wird der Grundpreis für die jeweils zu wägende Ware von einer Kasse an die vorstehend genannte Checkout-Waage übertragen, ist es bevorzugt, wenn das von der Checkout-Waage erzeugte Wägeergebnis zumindest das Gewicht und ggf. den Preis, insbesondere den Grundpreis und/oder den errechneten Preis, der jeweiligen Waage umfasst. Wird an die Checkout-Waage zusätzlich die die jeweils gewägte Ware kennzeichnende Information übermittelt, kann das Wägeergebnis auch die die jeweils gewägte Waage kennzeichnende Information, beispielsweise die Artikelnummer (PLU) oder den Namen der Ware oder ein sonstiges Identifikationszeichen der Ware, umfassen.

Wird der Grundpreis für die jeweils zu wägende Ware nicht an die vorstehend genannte Checkout-Waage übertragen, umfasst das von der Checkout-Waage erzeugte und anschließend an die Kasse übermittelte Wägeergebnis in der Regel lediglich das Gewicht der jeweiligen Ware. Der Preis und die die jeweilige Ware kennzeichnende Information können dann von der vorstehend genannten Steuereinrichtung, insbesondere von der Steuereinrichtung der Kasse, dem dem jeweiligen Wägeergebnis jeweils zugeordneten Wägedatensatz hinzugefügt werden. Wird an die Checkout-Waage auch die die jeweils gewägte Ware kennzeichnende Information übermittelt, kann das Wägeergebnis wiederum auch die die jeweils gewägte Ware kennzeichnende Information umfassen.

In den Wägedatensätzen sind neben den Gewichten der gewägten Waren und den die gewägten Waren kennzeichnenden oder identifizierenden Informationen bevorzugt die Preise der gewägten Waren enthalten. Die Wägedatensätze können jeweils weitere Angaben enthalten, beispielsweise wann der jeweilige Wägedatensatz abgespeichert oder das jeweils zugeordnete Wägeergebnis erzeugt oder empfangen wurde. Bei einer aus einem Wägedatensatz ermittelten Angabe handelt es sich bevorzugt um das Gewicht, den errechneten Preis, den Grundpreis und/ oder die Artikelnummer der jeweils gewägten Ware. Die Angaben werden insbesondere dann ermittelt, wenn die Wägedatensätze diesen Angaben nicht bereits entsprechen. Bei einem Ausdrucken können die Artikelnummern durch die Namen der gewägten Waren ersetzt werden, wobei die Zuordnung der Namen zu den Artikelnummern beispielsweise in einer Artikelstammdatei hinterlegt sein kann, auf die ein POS-Terminal Zugriff hat.

Die Speichereinrichtung kann an einem POS-Terminal angeordnet oder als Teil eines POS-Terminals ausgebildet sein. Die Speichereinrichtung kann aber auch als ein externes Gerät und/oder über eine externe Schnittstelle, beispielsweise USB, mit dem POS-Terminal verbunden sein.

Die vorstehend genannte Steuereinrichtung kann dazu ausgebildet sein, die Speichereinrichtung derart zu steuern, dass Wägedatensätzen einer Vielzahl von zusammengehörigen Wägevorgängen eines nachfolgenden Verkaufsvorgangs in der Speichereinrichtung gespeichert werden, ohne dass die Wägedatensätze der Vielzahl von zusammengehörigen Wägevorgängen des vorhergehenden Verkaufsvorgangs in der Speichereinrichtung gelöscht werden. Hierdurch können die Wägeergebnisse sämtlicher Verkaufsvorgänge über einen bestimmten Zeitraum hinweg, beispielsweise einen Tag, eine Woche, einen Monat oder ein Jahr, gesammelt und zu Marktforschungszwecken analysiert werden. Grundsätzlich ist es aber auch möglich, dass die Wägeergebnisse eines Verkaufsvorgangs gelöscht werden, bevor Wägeergebnisse eines neuen Verkaufsvorgangs in der Speichereinrichtung abgelegt werden.

Grundsätzlich ist es möglich, dass die vorstehend genannte Steuereinrichtung ein Bestandteil der vorstehend genannten Checkout-Waage ist. Bevorzugt ist die Steuereinrichtung jedoch als Teil eines POS-Terminals der vorstehend genannten Checkout-Vorrichtung ausgebildet.

Die Speichereinrichtung oder eine weitere Speichereinrichtung kann zur Speicherung von Scanndatensätzen vorgesehen sein, wobei die Wägevorrichtung dazu ausgelegt ist, gleichzeitig gespeicherte Scanndatensätze, die einer Vielzahl von zusammengehörigen Scannvorgängen eines Verkaufsvorgangs zugeordnet sind, oder hieraus ermittelte Angaben zu einem durch das und/oder ein weiteres Auslösesignal vorgegebenen Zeitpunkt, insbesondere am Ende des Verkaufsvorgangs, insbesondere gemeinsam, insbesondere zusammen mit zu dem Verkaufsvorgang gehörigen Wägedatensätzen, an eine Kasseneinrichtung oder eine Druckeinrichtung auszugegeben. Die Scanndatensätze können zumindest den Preis und/oder eine die jeweils gescannte Ware kennzeichnende Information umfassen. Hierdurch wird ermöglicht, dass vor dem Abdrucken der Scann- und Wägedatensätze, d.h. zu einem Zeitpunkt, zu dem die Druckeinrichtung ansonsten untätig wäre, beispielsweise Gutscheine oder Rabattmarken (Couponing) gedruckt werden können, also zu einem Zeitpunkt, zu dem sich der Kunde noch in dem Verkaufsvorgang befindet. Ferner wird ermöglicht, dass die Scanndatensätze sortiert ausgedruckt werden können. Weiterhin wird ermöglicht, für mehrere identische Waren, welche nacheinander gescannt wurden, anstelle mehrerer, ggf. durch andere Zeilen voneinander getrennte Einzelzeilen nur eine gemeinsame Zeile auf dem Kassenbon vorzusehen, wobei in der Regel in der gemeinsamen Zeile dann die Anzahl der identischen Waren angegeben ist.

Bevorzugt umfasst das Auslösesignal ein Eingabesignal zur Bildung einer Kundensumme zum Abschluss des Verkaufsvorgangs. Beispielsweise kann das Auslösesignal durch Betätigung einer Summentaste an einer Kasse ausgelöst werden, wobei die Bildung der Kundensumme durch ein POS-Terminal erfolgt.

Gemäß nationalen Vorschriften sind beispielsweise im geschäftlichen Verkehr verwendete Waagen, beispielsweise zum Bestimmen des Preises einer Ware anhand des Gewichts, eichpflichtig. Auf derartigen eichpflichtigen Waagen werden Software-Module ausgeführt, wobei zwischen eichpflichtigen und nicht-eichpflichtigen Software-Modulen unterschieden wird. Hierbei sind die eichpflichtigen Software-Module zur Ausführung der eichpflichtigen Funktionen, wie Gewichtsermittlung und Preisberechnung sowie Sichtdarstellung und Ausdruck dieser Daten verantwortlich.

Insbesondere handelt es sich bei einem Software-Modul, das von der Wägevorrichtung dafür zugelassen ist, auf die in der Speichereinrichtung gespeicherten Wägedatensätze zuzugreifen, um ein derartiges eichpflichtiges Software-Modul.

Um sicherzustellen, dass ausschließlich eichpflichtige Software-Module auf die Speichereinrichtungen der erfindungsgemäßen Wägevorrichtungen zugreifen können, insbesondere um dadurch eine Manipulation der mit einem "Eichstempel" versehenen Wägedatensätze mit den Parametern Gewicht und Preis durch nicht-eichpflichtige Software-Module zu verhindern, sind den eichpflichtigen Software-Modulen die Identifikationsbezeichnungen, beispielsweise in Form von Nummern, zugeordnet.

Die Steuereinrichtung steuert den Zugriff auf die Speichereinrichtung, indem sie eine Filterfunktionalität ausführt bzw. ein Filter-Modul aufweist. Das erfindungsgemäße Filter-Modul kennt die dem oder den eichpflichtigen Software-Modulen zugeordneten Identifikationsbezeichnungen. Wird von einem Software-Modul der Wägevorrichtung versucht, auf die Speichereinrichtung zuzugreifen, überprüft das Filter-Modul die dem zugreifenden Software-Modul zugeordnete Identifikationsbezeichnung. Stellt sich dabei heraus, dass es sich bei dem zugreifenden Software-Modul um ein eichpflichtiges Software-Modul handelt, wird ein Schreibzugriff auf die Speichereinrichtung erlaubt. Die Speicherung des jeweiligen Wägedatensatzes erfolgt dabei in einem von dem Filter-Modul insbesondere frei bestimmbaren Speicherplatz der Speichereinrichtung. Hierfür verwaltet die Steuereinrichtung die Adressen der Wägedaten. Vorzugsweise ist vorgesehen, dass die Steuereinrichtung die Adressen der Wägedatensätze als Zeiger, die auf die Speicherplätze der Wägedaten verweisen, verwaltet. Dazu können die Adressen bzw. die Zeiger von der Steuereinrichtung z. B. in Form einer Tabelle oder als Matrix gespeichert werden. Insbesondere sind keine Buchungsspeicher vorhanden, deren Größe und Anzahl fest vorgegeben ist und die weder angelegt noch formatiert werden können.

Besitzt das zugreifende Software-Modul keine oder lediglich eine nicht zugelassene Identifikationsbezeichnung ist kein Schreibzugriff möglich, so dass ein Eintrag nicht möglich ist. Nicht-eichpflichtige Software-Module besitzen somit zumindest kein Schreibrecht.

Insbesondere können mehrere Waagen, die beispielsweise in einem Verbund organisiert sind, auf eine gemeinsame Speichereinrichtung zugreifen, so dass ein Durchbedienen, wie eingangs erläutert, möglicht ist.

Nach einer Ausbildung der Erfindung ist das Filter-Modul dazu ausgelegt, auf der Speichereinrichtung gespeicherte Wägedatensätze für Lesezugriffe von Software-Modulen freizugeben, die eine zugelassene Identifikationsbezeichnung besitzen. Somit können also zumindest eichpflichtige Software-Module unbeschränkt auf die Speichereinrichtung zugreifen.

Grundsätzlich ist es jedoch auch möglich, dass das Filter-Modul dazu ausgelegt ist, auf der Speichereinrichtung gespeicherte Wägedatensätze auch für Lesezugriffe von Software-Modulen freizugeben, die keine zugelassene Identifikationsbezeichnung besitzen.

Insbesondere in diesem Fall ist es von Vorteil, wenn das Filter-Modul dazu ausgelegt ist, die von einem Software-Modul ohne zugelassene Identifikationsbezeichnung ausgelesenen Wägedatensätze mit einer entsprechenden Kennzeichnung, d.h. einer Kennzeichnung, die anzeigt, dass der jeweilige ausgelesene Wägedatensatz von einem Software-Modul ohne zugelassene Identifikationsbezeichnung ausgelesen wurde, zu versehen oder von derartigen Wägedatensätzen eine vorhandene Kennzeichnung zu entfernen. Es wird also dafür gesorgt, dass der jeweilige ausgelesene Wägedatensatz, d.h. die ausgelesene Kopie des in der Speichereinrichtung vorhandenen Original-Wägedatensatzes, den vorstehend genannten Eichstempel verliert. Der in der Speichereinrichtung weiterhin gespeicherte Original-Wägedatensatz hingegen behält seinen Eichstempel.

Die Speicherung der Wägedatensätze kann fortlaufend in einem beliebigen Speicherbereich erfolgen. Die Speichereinrichtung kann dabei als beliebiger Speicher ausgeführt sein, z.B. als festinstallierter Speicher, als USB-Speicher-Stick oder als Speicherkarte. Ermöglicht wird dies insbesondere dadurch, dass das Filter-Modul nicht nur den Zugriff auf die Speichereinrichtung steuert, sondern zugleich die Adressen der Speichereinrichtung verwaltet, z.B. in Form von Zeigern. Das Filter-Modul kann zusammen mit den Wägedatensätzen die jeweilige Identifikationsbezeichnung und/oder eine Kennung für den jeweiligen Verkaufsvorgang ablegen. Alternativ können durch das Filter-Modul die Wägedatensätze als Vektoren in einer Tabelle einem Verkaufsvorgang zugeordnet werden. Dadurch können beliebig viele Waagen in einen Verbund eingebunden werden, die dann alle auf eine gemeinsame Speichereinrichtung zugreifen, und es können beliebig viele Wägedatensätze oder Verkaufsvorgänge abgespeichert werden. Deren Anzahl wird lediglich durch die Speicherkapazität der Speichereinrichtung begrenzt.

Ist die Speichereinrichtung ist nichtflüchtiger Speicher ausgebildet, beispielsweise als Flash-Speicher, Festplatte, batteriegestütztes SRAM oder als dedizierter Speicherbereich auf einem nichtflüchtigen Speicher, gehen die Wägedatensätze bei einem Stromausfall nicht verloren.

Ist die Speichereinrichtung als insbesondere austauschbarer Wechselspeicher ausgebildet, wie es beispielsweise bei Verwendung eines USB-Speicher-Sticks oder einer Speicherkarte der Fall ist, ist es bevorzugt, wenn die Speichereinrichtung mit einer Kennung versehen und das Filter-Modul dazu ausgelegt ist, anhand der Kennung das Vorhandensein der Speichereinrichtung wiederkehrend zu überprüfen. Hierdurch kann ein Entfernen oder ein Austauschen der Speichereinrichtung detektiert werden. Dies dient der Manipulationserkennung und/oder -sicherung.

Insbesondere bei einem frei zugänglichen Speicher oder Wechselspeicher, beispielsweise in Form eines USB-Speicher-Sticks oder einer Speicherkarte, ist es bevorzugt, wenn das Filter-Modul dazu ausgelegt ist, bei einem erlaubten Schreibzugriff die Wägedatensätze digital zu signieren und/oder bei einem erlaubten Lesezugriff eine digitale Signatur zu prüfen. Beispielsweise kann zur digitalen Signierung über einen jeweiligen Wägedatensatz eine Prüfsumme oder ein Hashcode gebildet werden, wobei zumindest die Prüfsumme oder der Hashcode verschlüsselt wird. Es können jedoch auch die Wägedatensätze selbst verschlüsselt werden. Dies dient ebenfalls der Manipulationserkennung und/oder -sicherung.

Nach einer anderen Ausbildung der Erfindung ist das Filter-Modul dazu ausgelegt, bei einem erlaubten Lesezugriff eines Software-Moduls mit zugelassener Identifikationsbezeichnung, das einen Abdruck des oder der ausgelesenen Wägedatensätze oder hieraus ermittelter Angaben auf einer Druckeinrichtung bewirkt, den jeweiligen Wägedatensatz mit einer entsprechenden Kennzeichnung, d.h. einer Kennzeichnung, die anzeigt, dass der jeweilige ausgelesene Wägedatensatz bereits abgedruckt wurde, zu versehen. Der jeweilige Wägedatensatz muss dann nicht gelöscht werden.

Weitere vorteilhafte Ausführungsformen der Erfindung sind in den Unteransprüchen, der Figurenbeschreibung sowie der Zeichnung angegeben.

Nicht beschränkende Ausführungsbeispiele der Erfindung werden anhand der Zeichnung nachfolgend beschrieben. In dieser zeigen, jeweils in schematischer Darstellung:
- Fig. 1: ein erfindungsgemäßes Checkout-System, und
- Fig. 2: einen erfindungsgemäßen Wägeverbund mit mehreren Waagen.

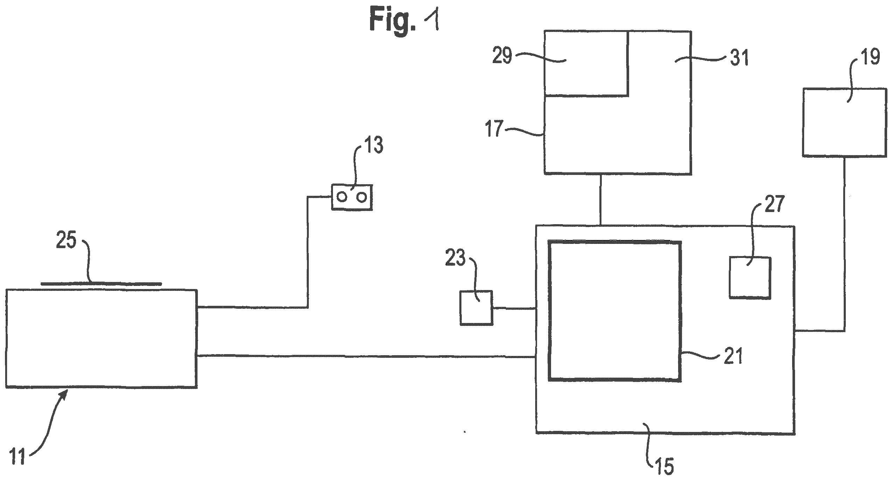

Das in der Fig. 1 dargestellte Checkout-System umfasst zunächst eine Checkout-Waage 11 mit einer Lastplatte 25 zur Aufnahme einer zu wägenden Ware. Bei einem Wägevorgang wird über die Lastplatte 25 eine nicht dargestellte Wägezelle an sich bekannter Art mit dem Gewicht der jeweiligen auf der Lastplatte 25 befindlichen Ware belastet, wodurch ein gewichtabhängiges elektrisches Analogsignal erzeugt wird, welches mittels eines nicht dargestellten Analog-Digital-Wandlers in ein digitales Gewicht gewandelt wird. Anschließend wird das Gewicht an ein POS-Terminal 15 des Checkout-Systems übertragen, zusammen mit einem Preis der gewägten Ware, welche aus dem Gewichtsergebnis und einem von dem POS-Terminal 15 zuvor an die Checkout-Waage 11 übertragenen Grundpreis der Ware berechnet wurde, wobei das Gewicht und der Preis sowie die ebenfalls von dem POS-Terminal 15 zuvor an die Checkout-Waage 11 übertragene Artikelnummer (PLU) oder sonstige Identifikation der Ware ein beispielhaftes Wägeergebnis im Sinne der vorliegenden Anmeldung bilden.

Das POS-Terminal 15 umfasst eine Steuereinrichtung, insbesondere einen Prozessor 27, der dazu ausgebildet ist, das von der an das POS-Terminal 15 angeschlossenen Checkout-Waage 11 an das POS-Terminal 15 übermittelte Wägeergebnis des Wägevorgangs in einem eichfähigen Bereich 29 einer Anzeigeeinrichtung 17 anzuzeigen. Das Wägeergebnis wird unmittelbar, d.h. noch bevor die nächste Ware gescannt oder gewägt wird, angezeigt. In dem übrigen Bereich 31 der Anzeigeeinrichtung 17 können beispielsweise von einer nicht gezeigten, unterhalb einer Glasplatte der Lastplatte 25 angeordneten, an das POS-Terminal 15 angeschlossenen Scanneinrichtung des Checkout-Systems an das POS-Terminal 15 übermittelte Preise von gescannten Waren dargestellt werden.

Darüber hinaus ist der Prozessor 27 dazu ausgebildet, das Wägeergebnis des Wägevorgangs in einem nichtflüchtigen, eichfähigen Speicher 23 abzulegen. Umfasst ein Verkaufsvorgang an einen Kunden mehrere Wägevorgänge, d.h. der Kunde kauft mehrere Waren, die jeweils nach Gewicht verkauft werden, werden die Wägeergebnisse aller Wägevorgänge dieses Kunden zunächst in dem sicheren Speicher 23 abgelegt. Ein sofortiges Abdrucken des jeweiligen Wägeergebnisses findet nicht statt. Die Speicherung der Wägeergebnisse kann beispielsweise nach Art einer file-Ablage oder einer Datenbankablage erfolgen.

Die Preise von Waren, die einen Strichcode aufweisen und mittels des Scanners ermittelt werden, können ebenfalls gespeichert werden. Die Speicherung kann dann in dem Speicher 23 oder einem weiteren, nicht dargestellten Speicher erfolgen.

Sind alle Waren des Kunden jeweils entweder gewägt oder gescannt, drückt eine Kassiererin oder ein Kassierer beispielsweise eine Summentaste an dem POS-Terminal 15, wodurch ein Trigger-Signal ausgelöst wird, welches dem Prozessor 27 anzeigt, dass der Verkaufsvorgang für diesen Kunden abgeschlossen werden kann. In Reaktion auf das Trigger-Signal initiiert der Prozessor 27 das Drucken aller in dem Speicher 23 für den jeweiligen Verkaufsvorgang abgespeicherten Wägeergebnisse auf dem Bondrucker 19, der bevorzugt als Thermodrucker oder Laserdrucker ausgebildet ist, welche jeweils gegenüber einem Nadeldrucker eine höhere Druckgeschwindigkeit aufweisen. Hierdurch können die zusammengehörigen Wägeergebnisse eines Verkaufsvorgangs an einen Kunden in einem einzigen Druckvorgang gemeinsam, an einem Stück, am Ende des Verkaufsvorgangs abgedruckt werden, wobei die Wägeergebnisse jeweils in einer eigenen Zeile und beispielsweise unmittelbar untereinander oder mit gescannten Artikeln dazwischen erscheinen. Der Bondrucker 19 kann über eine parallele oder serielle Schnittstelle an die Kasse 15 angeschlossen sein. Wünscht der Kunde auf Nachfrage keinen Kassenbon, kann auf den Ausdruck ganz verzichtet werden. Die Summenwerte werden dann nur auf der Anzeigeeinrichtung 17 dargestellt. Dies spart Papier und schont die Druckerkomponenten.

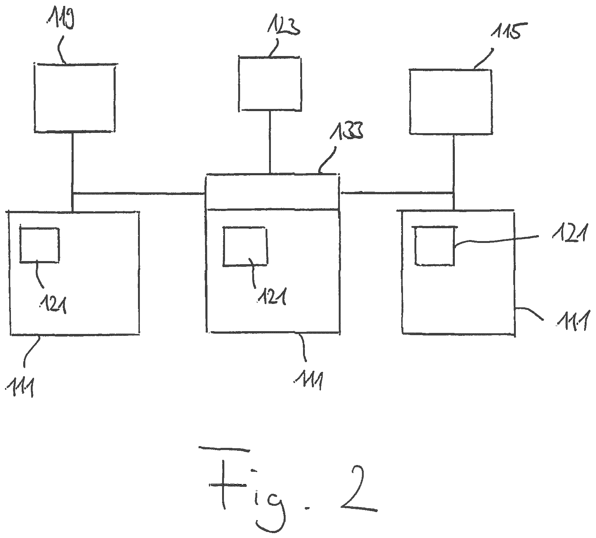

Das vorstehend beschriebene Verfahren zur Verarbeitung von Wägeergebnissen einer Vielzahl von Wägevorgängen wird dabei von einem auf einer nicht gezeigten Festplatte des POS-Terminals 15 gespeicherten, eichpflichtigen Software-Modul 21 ausgeführt, welches von einem Betriebssystem des POS-Terminals 15 in einen nicht gezeigten Arbeitsspeicher des POS-Terminals 15 geladen wird. Das eichpflichtige Software-Modul 21 ist in Übereinstimmung mit eichrechtlichen Vorschriften durch eine Prüfsumme geschützt und nicht unbemerkt veränderbar. Insbesondere wird die Versionsnummer des Software-Moduls 21 mit Datum und Uhrzeit als Komponente im Logbuch der Checkout-Waage 11 abgelegt und mittels eines CRC-Verfahrens auf Gültigkeit geprüft. Neben dem Software-Modul 21 können zusätzliche Softwareprogramme, z.B. Kassenapplikationen oder nicht-eichpflichtige Applikationsprogramme, vorhanden sein. Jedoch kann nur das eichpflichtige Software-Modul 21 die Wägedatensätze in dem sicheren Speicher 23 abspeichern. Dies wird durch ein in Fig. 1 nicht dargestelltes Filter-Modul erreicht, welches von der Steuereinrichtung 27 ausgeführt und nachfolgend im Zusammenhang mit Fig. 2 noch näher beschrieben wird.

Werden die Preise und Namen der gescannten Waren abgespeichert, können zusammengehörigen Scannvorgängen zugeordnete Preise und Namen ebenfalls gemeinsam am Ende des Verkaufsvorgangs abgedruckt werden.

Darüber hinaus ist eine an die Checkout-Waage 11 angeschlossene Tastereinrichtung 13 dargestellt, welche zum Nullstellen der Checkout-Waage 11 und/oder für einen Reset der Checkout-Waage 11 vorgesehen ist.

Die Erfindung gestattet, an einer Checkout-Vorrichtung eines Kassenplatzes das Abdrucken von Wägeergebnissen bis zum Abschluss des Verkaufsvorgangs zu verzögern, wodurch ein sortierter Ausdruck der gekauften Waren ermöglicht wird. Der Drucker ist deshalb während des Verkaufsvorgangs für andere Anwendungen, wie z.B. Abdrucken von Gutscheinen oder Rabattmarken, verwendbar.

Verwenden mehrere Bediener bzw. Kassierer, welche verschiedene Kunden bedienen, eine Checkout-Vorrichtung gemeinsam, können die Wägedatensätze der verschiedenen Bediener bzw. Kunden zeitlich durcheinander, aber dennoch getrennt voneinander, in dem sicheren Speicher abgelegt werden. Damit ist auch ein getrennter Abdruck für die verschiedenen Kunden möglich.

Der in Fig. 2 gezeigte Waagenverbund umfasst mehrere Waagen 111, die beispielsweise an einer Fleisch- und Wursttheke in einem Supermarkt aufgestellt sind. Im Beispiel sind drei Waagen 111 dargestellt, wobei in einem Verbund jedoch auch zwei oder mehr als drei Waagen 111 vorhanden sein können. Für die Waagen 111 ist ein gemeinsamer Speicher 123 vorgesehen, in dem die von den Waagen 111 erzeugten Wägedatensätze jeweils abgelegt werden können und auf den jede der Waagen 111 zugreifen kann. Im Verbund ist also lediglich ein einziger Speicher 123 vorhanden.

Hierzu umfasst jede der Waagen 111 üblicherweise mehrere eichpflichtige Software-Module, die jeweils für einen Zugriff auf den Speicher 123 zugelassen sind. Beispielsweise kann es sich bei einem derartigen eichpflichtigen Software-Modul um ein Modul handeln, welches auf den Speicher 123 zugreift, um einen jeweiligen, einem erzeugten Wägeergebnis zugeordneten Wägedatensatz in dem Speicher 123 abzulegen, oder um ein Modul, welches auf den Speicher 123 zugreift, um einen jeweiligen Wägedatensatz auf einer Anzeigeeinrichtung (vgl. Bezugszeichen 17, 29 aus Fig. 1) der jeweiligen Waage 111 darzustellen, oder um ein Modul, welches auf den Speicher 123 zugreift, um einen oder mehrere jeweilige Wägedatensätze zum Abdruck auf einem Drucker 119, insbesondere einem einer Kasse 115 zugeordneten Drucker, abzurufen. In Fig. 2 ist zu jeder Waage 111 beispielhaft lediglich ein eichpflichtiges Software-Modul 121 gezeigt. Neben eichpflichtigen Software-Modulen 121 können auf den Waagen 111 zusätzlich nicht-eichpflichtige Software-Module betrieben werden.

Die gemeinsame Verwendung eines einzigen Speichers 123 erlaubt, einen Kunden von mehreren Waagen 111 aus zu bedienen, ohne bei einem Kassenwechsel den Verkaufsvorgang an der zuletzt benutzten Kasse 111 zuvor beenden zu müssen. Zusammengehörige Wägeergebnisse eines Verkaufsvorgangs an einen Kunden können dann in einem einzigen Druckvorgang gemeinsam am Ende des Verkaufsvorgangs abgedruckt werden.

Um sicherzustellen, dass lediglich eichpflichtige Software-Module 121 auf die gespeicherten Wägedatensätze zugreifen können, um die Manipuliersicherheit der Wägedatensätze zu gewährleisten, ist ein Filter-Modul 133 vorgesehen. Nur über das Filter-Modul 133 kann auf den Speicher 123 zugegriffen werden. Das als Software ausgebildete Filter-Modul 133 wird von einer nicht dargestellten Steuereinrichtung ausgeführt. Das Filter-Modul 133 ist bevorzugt einer der Waagen 111 zugeordnet.

Darüber hinaus besitzen die eichpflichtigen Software-Module 121 jeweils eine das jeweilige Software-Modul 121 kennzeichnende Identifikationsbezeichnung, wobei die Identifikationsbezeichnungen der eichpflichtigen Software-Module 121 jeweils in dem Filter-Modul 133 hinterlegt und diesem somit als zugelassene Identifikationsbezeichnungen bekannt sind.

Bei einem Zugriff auf den Speicher 123 kann das Filter-Modul 133 daher überprüfen, ob es sich bei dem jeweils zugreifenden Software-Modul um ein Software-Modul handelt, das eine zugelassene Identifikationsbezeichnung besitzt. Sofern dies der Fall ist, wird ein Schreibzugriff auf einen von dem Filter-Modul 133 bestimmbaren, in einem freien Speicherbereich der Speichereinrichtung 123 liegenden Speicherplatz erlaubt.

Lesezugriffe auf den Speicher 123 sind sowohl eichpflichtigen als auch nicht-eichpflichtigen Software-Modulen erlaubt, wobei das Filter-Modul 133 gewährleistet, dass bei einem Zugriff von einem nicht-eichpflichtigen Software-Modul die ausgelesenen Wägedatensätze als "nicht mehr eichsicher" markiert werden.

Werden z.B. Wägedatensätze einer Vielzahl von zusammengehörigen Wägevorgängen eines Verkaufsvorgangs zum Abdruck abgerufen, müssen die entsprechenden Wägedatensätze nicht notwendigerweise gelöscht werden, sondern können mit einer Kennzeichnung versehen werden, die anzeigt, dass die entsprechenden Wägedatensätze bereits abgedruckt wurden.

Sofern als Speicher 123 als Wechselspeicher ausgebildet ist, ist das Filter-Modul 133 bevorzugt dazu ausgelegt, bei einem erlaubten Schreibzugriff die Wägedatensätze digital zu signieren und bei einem erlaubten Lesezugriff die digitale Signatur zu prüfen, wobei bevorzugt lediglich eine zugehörige Prüfsumme oder ein Hashcode verschlüsselt wird. Der zugehörige Schlüssel ist nur dem Filter-Modul 133 bekannt. Wird der Wechselspeicher entfernt, kann an anderer Stelle die digitale Signatur nicht verifiziert werden. Wird der Wechselspeicher vorübergehend entfernt und werden die darauf befindlichen Daten in dieser Zeit manipuliert, kann dies von dem Filter-Modul 123 anhand der digitalen Signatur später festgestellt werden.

Die erfindungsgemäße Wägevorrichtung erlaubt, zusammengehörige Wägedatensätze gemeinsam zu drucken. In einem Waagenverbund kann daher ein "Durchbedienen" realisiert werden.

### Bezugszeichenliste

- 11: Checkout-Waage
- 13: Tastereinrichtung
- 15: POS-Terminal
- 17: Anzeigeeinrichtung
- 19: Bondrucker
- 21: Software-Modul
- 23: sicherer Speicher
- 25: Lastplatte
- 27: Prozessor
- 29: eichfähiger Bereich der Anzeigeeinrichtung
- 31: übriger Bereich der Anzeigeeinrichtung
- 111: Waage
- 115: Kasse
- 119: Drucker
- 121: Software-Modul
- 123: sicherer Speicher
- 133: Filter-Modul

## Patentansprüche

1. Wägevorrichtung mit wenigstens einer Waage (11, 111) und einer mit dieser verbundenen Checkout-Vorrichtung zum Verarbeiten von bei einer Vielzahl von zusammengehörigen Wägevorgängen eines Verkaufsvorganges erzeugten Wägeergebnissen von Waren, wobei ein jedes der Wägeergebnisse zumindest das Gewicht der bei dem jeweiligen Wägevorgang gewägten Ware umfasst und eine Speichereinrichtung (23, 123) vorgesehen ist, die dazu ausgebildet ist, den Wägeergebnissen zugeordnete Wägedatensätze zu speichern, wobei ein jeder der Wägedatensätze zumindest das Gewicht der bei dem jeweiligen Wägevorgang gewägten Ware und eine die jeweils gewägte Ware kennzeichnende Information umfasst,
**dadurch gekennzeichnet,**
**dass** auf die Speichereinrichtung (23, 123) von einzelnen, auf der Waage (11, 111) und der Checkout-Vorrichtung laufenden Software-Modulen (21, 121) zugegriffen wird, die jeweils eine Identifikationsbezeichnung besitzen,
wobei vorgesehen ist, dass eine Steuereinrichtung (27) die Speichereinrichtung (23, 123) und den Zugriff auf die Speichereinrichtung (23, 123) derart steuert, dass die Wägedatensätze eines zusammenhängenden Verkaufsvorganges gleichzeitig neben Wägedatensätzen weiterer Verkaufsvorgänge in der Speichereinrichtung (23, 123) gespeichert und jeweils einem Verkaufsvorgang eindeutig zugeordnetsind, indem die Steuereinrichtung (27) die Adressen der einzelnen Wägedatensätze verwaltet, und die Identifikationsbezeichnung des zugreifenden Software-Moduls überprüft, ob diese für einen Speicherzugriff zugelassen ist, und lediglich bejahendenfalls einen Schreibzugriff auf einen von der Steuereinrichtung (27) bestimmbaren, in einem freien Speicherbereich der Speichereinrichtung (23, 123) liegenden Speicherplatz erlaubt.

2. Wägevorrichtung nach Anspruch 1,
**dadurch gekennzeichnet,**
**dass** die Wägevorrichtung dazu ausgelegt ist, die gleichzeitig gespeicherten Wägedatensätze oder hieraus ermittelte Angaben zu einem durch ein Auslösesignal vorgegebenen Zeitpunkt, insbesondere am Ende des Verkaufsvorgangs, an eine Kasseneinrichtung (15, 115) oder eine Druckeinrichtung (19, 119) auszugeben.

3. Wägevorrichtung nach Anspruch 1 oder 2,
**dadurch gekennzeichnet,**
**dass** für mehrere Waagen (111) lediglich eine gemeinsame Speichereinrichtung (123) vorgesehen ist.

4. Wägevorrichtung nach einem der vorstehenden Ansprüche,
**dadurch gekennzeichnet,**
**dass** die Steuereinrichtung (27) dazu ausgelegt ist, auf der Speichereinrichtung (23, 123) gespeicherte Wägedatensätze für Lesezugriffe von Software-Modulen (121) freizugeben, die eine zugelassene Identifikationsbezeichnung besitzen.

5. Wägevorrichtung nach Anspruch 4,
**dadurch gekennzeichnet,**
**dass** die Steuereinrichtung (27) dazu ausgelegt ist, auf der Speichereinrichtung (23, 123) gespeicherte Wägedatensätze auch für Lesezugriffe von Software-Modulen freizugeben, die keine zugelassene Identifikationsbezeichnung besitzen.

6. Wägevorrichtung nach Anspruch 5,
**dadurch gekennzeichnet,**
**dass** die Steuereinrichtung (27) dazu ausgelegt ist, die von einem Software-Modul (135) ohne zugelassene Identifikationsbezeichnung ausgelesenen Wägedatensätze mit einer entsprechenden Kennzeichnung zu versehen oder von derartigen Wägedatensätzen eine vorhandene Kennzeichnung zu entfernen.

7. Wägevorrichtung nach einem der vorstehenden Ansprüche,
**dadurch gekennzeichnet,**
**dass** die Speichereinrichtung (23, 123) als Wechselspeicher ausgebildet ist.

8. Wägevorrichtung nach einem der vorstehenden Ansprüche,
**dadurch gekennzeichnet,**
**dass** die Speichereinrichtung (23, 123) als Speicherkarte, USB-Speicher-Stick oder dergleichen ausgebildet ist.

9. Wägevorrichtung nach einem der vorstehenden Ansprüche,
**dadurch gekennzeichnet,**
**dass** die Speichereinrichtung (23, 123) mit einer Kennung versehen und die Steuereinrichtung (27) dazu ausgelegt ist, anhand der Kennung das Vorhandensein der Speichereinrichtung (23, 123) wiederkehrend zu überprüfen.

10. Wägevorrichtung nach einem der vorstehenden Ansprüche,
**dadurch gekennzeichnet,**
**dass** die Steuereinrichtung (27) dazu ausgelegt ist, bei einem erlaubten Schreibzugriff die Wägedatensätze digital zu signieren und/oder bei einem erlaubten Lesezugriff eine digitale Signatur zu prüfen.

11. Wägevorrichtung nach einem der vorstehenden Ansprüche,
**dadurch gekennzeichnet,**
**dass** die Steuereinrichtung (27) dazu ausgelegt ist, bei einem erlaubten Lesezugriff eines Software-Moduls (121) mit zugelassener Identifikationsbezeichnung, das einen Abdruck des oder der ausgelesenen Wägedatensätze oder hieraus ermittelter Angaben auf einer Druckeinrichtung (19, 119) bewirkt, den jeweiligen Wägedatensatz mit einer entsprechenden Kennzeichnung zu versehen.

12. Wägevorrichtung nach einem der vorstehenden Ansprüche,
**dadurch gekennzeichnet,**
**dass** die Speichereinrichtung (23) oder eine weitere Speichereinrichtung zur Speicherung von Scanndatensätzen vorgesehen ist, wobei die Wägevorrichtung dazu ausgelegt ist, gleichzeitig gespeicherte Scanndatensätze, die einer Vielzahl von zusammengehörigen Scannvorgängen eines Verkaufsvorgangs zugeordnet sind, oder hieraus ermittelte Angaben zu einem durch ein Auslösesignal vorgegebenen Zeitpunkt, insbesondere am Ende des Verkaufsvorgangs, an eine Kasseneinrichtung (15) oder eine Druckeinrichtung (19) auszugeben.

## Claims

1. A weighing apparatus having at least one scale (11, 111) and a checkout apparatus connected thereto for processing weighing results of products produced in a plurality of associated weighing processes of a sales procedure,
wherein each of the weighing results at least comprises the weight of the product weighed in the respective weighing process and a memory device (23, 123) is provided which is configured to store weighing data records associated with the weighing results; and wherein each of the weighing data records at least comprises the weight of the product weighed in the respective weighing process and information identifying the respective weighed product, **characterized in that**
the memory device (23, 123) is accessed by individual software modules (21, 121) which run on the scale (11, 111) and on the checkout apparatus and which each have an identification designation,
with provision being made that a control device (27) controls the memory device (23, 123) and the access to the memory device (23, 123) such that the weighing data records of a related sales procedure are simultaneously stored in the memory device (23, 123) in addition to weighing data records of further sales procedures and are unambiguously associated with a respective sales procedure **in that** the control device (27) manages the addresses of the individual weighing data records and checks the identification designation of the accessing software module as to whether said identification designation is approved for memory access and, only in the affirmative case, allows write access to a memory space which can be determined by the control device (27) and which is in a free memory region of the memory device (23, 123).

2. A weighing apparatus in accordance with claim 1,
**characterized in that**
the weighing apparatus is configured to output the simultaneously stored weighing data records or indications determined therefrom to a cash register device (15, 115) or to a printing device (19, 119) at a time predefined by a trigger signal, in particular at the end of the sales procedure.

3. A weighing apparatus in accordance with claim 1 or claim 2, **characterized in that**
only one common memory device (123) is provided for a plurality of scales (111).

4. A weighing apparatus in accordance with any one of the preceding claims,
**characterized in that**
the control device (27) is configured to release weighing data records stored on the memory device (23, 123) for read access by software modules (121) which have an approved identification designation.

5. A weighing apparatus in accordance with claim 4,
**characterized in that**
the control device (27) is configured to also release weighing data records stored on the memory device (23, 123) for read access by software modules which do not have an approved identification designation.

6. A weighing apparatus in accordance with claim 5,
**characterized in that**
the control device (27) is configured to provide the weighing data records read out by a software module (135) without an approved identification designation with a corresponding identification or to remove an existing identification from such weighing data records.

7. A weighing apparatus in accordance with any one of the preceding claims,
**characterized in that**
the memory device (23, 123) is configured as a removable memory.

8. A weighing apparatus in accordance with any one of the preceding claims,
**characterized in that**
the memory device (23, 123) is configured as a memory card, a USB memory stick or the like.

9. A weighing apparatus in accordance with any one of the preceding claims,
**characterized in that**
the memory device (23, 123) is provided with an identifier; and **in that** the control device (27) is configured to check the presence of the memory device (23, 123) recurrently using the identifier.

10. A weighing apparatus in accordance with any one of the preceding claims,
**characterized in that**
the control device (27) is configured to sign the weighing data records digitally on allowed write access and/or to check a digital signature on allowed read access.

11. A weighing apparatus in accordance with any one of the preceding claims,
**characterized in that**
the control device (27) is configured to provide the respective weighing data record with a corresponding identification on allowed read access of a software module (121) having an approved identification designation and effecting a printout of the read-out weighing data record or records or of indications determined therefrom on a printing device (19, 119).

12. A weighing apparatus in accordance with any one of the preceding claims,
**characterized in that**
the memory device (23) or a further memory device is provided for storing scanning data records, with the weighing apparatus being configured to output simultaneously stored scanning data records, which are associated with a plurality of associated scanning processes of a sales procedure, or to output indications determined therefrom to a cash register device (15) or to a printing device (19) at a time predefined by a trigger signal, in particular at the end of the sales procedure.

## Revendications

1. Dispositif de pesage comportant au moins une balance (11, 111) et un dispositif de d'encaissement connecté à celle-ci pour le traitement de résultats de pesage de marchandises, obtenus lors d'une pluralité d'opérations de pesage cohérentes d'une opération de vente,
dans lequel
chacun des résultats de pesage comprend au moins le poids de la marchandise pesée pendant l'opération de pesage respective et
il est prévu un système de mémorisation (23, 123) conçu pour mémoriser des ensembles de données de pesage associés aux résultats de pesage, chacun des ensembles de données de pesage comprend au moins le poids de la marchandise pesée pendant l'opération de pesage respective et une information caractérisant la marchandise pesée respective, **caractérisé en ce que**
des modules logiciels individuels (21, 121) exécutés sur la balance (11, 111) et sur le dispositif d'encaissement qui possèdent chacun une désignation d'identification ont accès au système de mémorisation (23, 123), et il est prévu qu'un système de commande (27) contrôle le système de mémorisation (23, 123) et l'accès au système de mémorisation (23, 123) de telle sorte que les ensembles de données de pesage d'une opération de vente cohérente sont mémorisés dans le système de mémorisation (23, 123) simultanément avec des ensembles de données de pesage d'autres opérations de vente et sont chacun associés de façon univoque à une opération de vente du fait que le système de commande (27) administre les adresses des ensembles de données de pesage individuels et vérifie la désignation d'identification du module logiciel ayant accès pour savoir si celle-ci est autorisée à un accès à la mémoire et autorise uniquement en cas de réponse affirmative un accès en écriture à un emplacement de mémoire susceptible d'être défini par le système de commande (27) et situé dans une zone de mémoire libre du système de mémorisation (23, 123).

2. Dispositif de pesage selon la revendication 1,
**caractérisé en ce que**
le dispositif de pesage est conçu pour émettre les ensembles de données de pesage mémorisés simultanément ou les informations déterminées à partir de ceux-ci à un système de caisse (15, 115) ou à un système d'impression (19, 119), à un instant défini par un signal de déclenchement, en particulier à la fin de l'opération de vente.

3. Dispositif de pesage selon la revendication 1 ou 2,
**caractérisé en ce que**
il est prévu un seul système de mémorisation (123) commun pour plusieurs balances (111).

4. Dispositif de pesage selon l'une des revendications précédentes,
**caractérisé en ce que**
le système de commande (27) est conçu pour libérer des ensembles de données de pesage mémorisés sur le système de mémorisation (23, 123) pour des accès de lecture de modules logiciels (121) qui possèdent une désignation d'identification autorisée.

5. Dispositif de pesage selon la revendication 4,
**caractérisé en ce que**
le système de commande (27) est conçu pour libérer des ensembles de données de pesage mémorisés sur le système de mémorisation (23, 123) également pour des accès en lecture de modules logiciels qui ne possèdent pas de désignation d'identification autorisée.

6. Dispositif de pesage selon la revendication 5,
**caractérisé en ce que**
le système de commande (27) est conçu pour munir d'un identifiant correspondant les ensembles de données de pesage lus par un module logiciel (135) dépourvu de désignation d'identification autorisée, ou bien pour enlever un identifiant présent de tels ensembles de données de pesage.

7. Dispositif de pesage selon l'une des revendications précédentes,
**caractérisé en ce que**
le système de mémorisation (23, 123) est réalisé sous forme de mémoire amovible.

8. Dispositif de pesage selon l'une des revendications précédentes,
**caractérisé en ce que**
le système de mémorisation (23, 123) est réalisé sous forme de carte à mémoire, de clé USB à mémoire ou analogue.

9. Dispositif de pesage selon l'une des revendications précédentes,
**caractérisé en ce que**
le système de mémorisation (23, 123) est muni d'un identifiant et le système de commande (27) est conçu pour vérifier à récurrence la présence du système de mémorisation (23, 123) en se basant sur l'identifiant.

10. Dispositif de pesage selon l'une des revendications précédentes,
**caractérisé en ce que**
le système de commande (27) est conçu pour signer numériquement les ensembles de données de pesage lors d'un accès en écriture autorisé et/ou de vérifier une signature numérique lors d'un accès en lecture autorisé.

11. Dispositif de pesage selon l'une des revendications précédentes,
**caractérisé en ce que**
le système de commande (27) est conçu pour munir d'un identifiant correspondant l'ensemble de données de pesage respectif lors d'un accès en lecture autorisé d'un module logiciel (121) à désignation d'identification autorisée qui procure une impression du ou des ensembles de données de pesage lu(s) ou des informations déterminées à partir de ceux-ci sur un système d'impression (19, 119).

12. Dispositif de pesage selon l'une des revendications précédentes,
**caractérisé en ce que**
il est prévu le système de mémorisation (23) ou un autre système de mémorisation pour mémoriser des ensembles de données de scannage, le dispositif de pesage étant conçu pour émettre à un système de caisse (15) ou à un système d'impression (19) les ensembles de données de scannage mémorisés simultanément et associés à une pluralité d'opérations de scannage cohérentes d'une opération de vente, ou des informations déterminées à partir de ceux-ci, à un instant défini par un signal de déclenchement, en particulier à la fin de l'opération de vente.
